# EUROPEAN PATENT APPLICATION

(11) **EP 3 343 723 A1**
(43) Date of publication of application: **04.07.2018**
(21) Application number: 16461583.3
(22) Date of filing: 27.12.2016
(51) Int. Cl.: H02J 7/00, F21S 9/02, H02J 9/06

(54) **EMERGENCY LIGHT FITTING FOR OPERATION AT LOW TEMPERATURES**

(71) Applicant: AMATECH - AMABUD Elektrotechnika Spólka z ograniczona odpowiedzialnoscia, 09-402 Plock (PL)
(72) Inventor: ADAMIAK, Artur, 09-402 Plock (PL)
(74) Representative: Kalita, Lucjan

(57) **Abstract**

The invention relates to emergency light fitting for operation at low temperatures. The fitting has a light source powered from the mains supply and the emergency power supply, wherein the emergency power supply system is fitted with a rechargeable battery and is powered by the AC/DC converter from the mains supply system and the rechargeable battery has a temperature sensor. The fitting is characterized in that the temperature sensor (15) is arranged in the immediate vicinity of the rechargeable battery (13), a rechargeable battery (13) is adapted to operate at low temperatures, and the fitting (1) is further provided with a microcontroller (9) with connected: a charger (12), controlled and regulated through the charging control and regulation channel (11) of the battery (13); the battery (13), which voltage level and performance status is measured and determined by the channel (14) of voltage measurement; a temperature sensor (15); a SEPIC converter (20) supplying the light sources (2, 3) controlled by the microcontroller (9) with a PWM signal through the channel (21) of control and regulation with its voltage measurement; block (22) for switching on the power supply from the battery (13) and the block (23) for switching on the power supply from the AC/DC converter (6), supplying the SEPIC converter (20), controlled respectively by the control channels (24) and (25); at least two supplying channels of light sources (2, 3) associated with the microcontroller (9) through the channels (26, 27) of the independent measurement of the current flowing in the light sources (2, 3); a communication interface (17); power supply of LDO logic circuits (28) generating the supply voltage of logic circuits, which is supplied via two channels (29) and (30) respectively: from the block of the AC/DC converter (6) and from the battery (13) and further the fitting (1) cooperates with the control and monitoring system communicating with it cyclically through the communication interface (17).

## Description

The invention relates to an emergency light fitting for operation at low temperatures, to -25°C, fitted with powering from its own battery, which because of its destiny cooperates with the central monitoring system in order to supervise and control the functional state of the fitting and its individual components, including the battery and the light sources. In particular, the alarm conditions are monitored resulting from exceeding the allowable temperature ranges. For this purpose a specially designed electronic emergency module is provided for in the fitting.

The emergency light fitting for operation at low temperatures usually are designed in such a way that the appropriate temperature conditions are arranged in the fitting by heating the interior. This is accomplished for example by placing a heating component in the fitting, which, however, requires more energy and is undesirable. The fittings composed of two units are also built, wherein one is installed inside a room with a lowered temperature, acting as the lamp unit, and the second in a room with normal environmental conditions, acting as the power supply and battery unit, and the units are interconnected.

Known solutions for emergency light fittings for operation at low temperatures can be equipped with a module, which in case of power failure automatically switches the light source into powering from batteries, and continue operation with reduced luminous flux for a certain period of time. The fluorescent light source suitable for operation at low temperatures are commonly used in the fittings.

Such a solution is shown for example in the patent application US2016270188 (A1), wherein the basic components are light units supplied from the module containing rechargeable batteries. It is responsible both for the control process of charging and discharging thereof, depending on the needs of the prevailing temperature conditions. In particular, when the temperature measured by the sensor exceeds the permitted value preset in the corresponding profile, the control module optimizes the temperature conditions of the battery operation by heating it through its discharging. This process is regulated by increased power supply to the light sources. As a result, by heating the battery module its operating conditions are improved, which extends its life.

The publication of the application US4382221 (A) reveals the known emergency power system provided from a lead-acid battery, designed especially for emergency power supply to a control panel of lifts. Emergency power supply circuit includes a battery charger having a temperature compensation system, adjusting the appropriate level of charging voltage. The charger increases the value of the charging current supplying higher voltage at the battery terminals. Once the desired voltage value on terminals is reached, the charging current is reduced to a minimum value. The assumed voltage at the terminals and the charging current supplied by the relevant circuit are adjusted by an input power supply. The measuring system measuring the temperature provides the correct voltage level and the value of the battery charging current. The temperature compensation circuit in the battery charger is made up of four thermosensitive semiconductor diodes connected in series, which are connected to an adjustable potentiometer regulating the battery charging current value based on the temperature of the battery.

The patent application GB1285068 (A) shows a battery charging circuit comprising a first sensor measuring the ambient temperature and a second sensor for measuring the temperature inside the battery. The process of charging the battery proceeds with switching between two charging modes: the low mode, which constitutes the maintenance charging and the high mode, constituting the basic or fast charging, with a choice of characteristics. Switching the charging mode is controlled by the temperature of the battery based on the difference in readings on the two temperature sensors. The system may further comprise a heating element for heating the outdoor temperature sensor.

The invention aim is the emergency light fitting for operation at low temperatures that does not require conditioning of the battery operation by heating the interior of the fitting. In addition, because of emergency purpose, it is desirable for the fitting to provide control of the power supply system through communication with the user regarding the operating conditions of the battery.

The essence of the emergency light fitting for operation at low temperatures having a light source powered from the mains supply and the emergency power supply, wherein the emergency power supply system is equipped with a rechargeable battery and is powered through the AC/DC converter from the mains supply and the rechargeable battery is controlled by a temperature sensor, is that the temperature sensor is arranged in the immediate vicinity of the rechargeable battery, a rechargeable battery is adjusted to operation at low temperatures and the fitting is equipped additionally with a microcontroller.

The microcontroller is connected with the charger, controlled and regulated by the battery charging control regulation channel. The battery voltage is measured through the voltage measurement channel and its efficiency status is determined. The temperature sensor is installed to monitor the temperature inside the fitting and is used to control the charger operation by the temperature compensation of the battery charging. The temperature sensor connected with the microcontroller allows monitoring the environment inside the fitting and signal the alarm states associated with the temperature on the local fitting control, or by remote communication. These data can be transmitted and stored in a central system to monitor the fittings.

A SEPIC converter, powering the light sources is controlled by the microcontroller with the PWM signal through the control and regulation channel. The SEPIC converter is powered by the block switching power from the battery and through the block switching powering from AC/DC converter, which are controlled by respective control channels of the microcontroller.

The light source, implemented at least by two channels, is connected to the SEPIC converter. The circuit of the light source current measurement along with the SEPIC converter voltage measurement circuit control the SEPIC converter and implement the control of the efficiency status of light sources by the microcontroller. The two channels, among which the light source systems are divided, provide protection and in the event of failure of one of the light source systems it allows the partial functionality of the fitting.

The functional state of the fitting and its individual components, in particular the battery, light sources, including alarm conditions regarding temperature are indicated by a local LED and status information is transmitted via the communication interface to the master control and monitoring system.

Voltage supplying the logic circuits, including the microcontroller, is supplied from the power supply of logic circuits, which is also powered via two channels, respectively, from AC/DC converter block and from the battery.

The fitting also co-operates with the master control and monitoring system, communicating with it cyclically through the communication interface. This makes it possible to query the status and transfer the information to the control unit about the current status of functional efficiency, current temperature of the battery, associated with the temperature in the fitting, temperatures recorded in the local fitting log and information about temperature alarms. The control unit records the information gathered in own independent and nonvolatile temperature log for each fitting in the form of twenty-four temperature readings a day. The records are accompanied by the date and time of measurement. The gathered data can be presented remotely via the web interface over an intranet or the Internet. Exceeding the limits of extreme temperatures is recorded in the master controller as an alarm event in the central system log and displayed on the Web interface and may be accompanied by an email.

Preferably, the rechargeable battery is a battery selected among the batteries: lead-acid (VRLA), nickel-cadmium (NiCd) or nickel-metal-hydride batteries (NiMH).

The communication interface module is a wire communication module.

The communication interface may also be a wireless communication module.

Preferably, the light source are LEDs, which are durable, energy efficient and their lighting properties do not deteriorate at low temperatures.

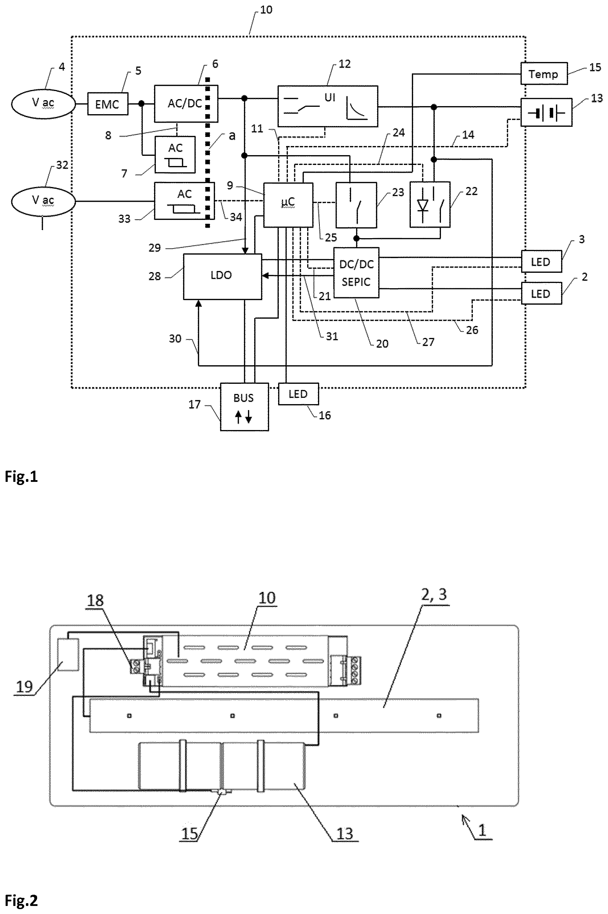

The fitting of the present invention is shown in detail in the embodiment in the drawing, in which Fig. 1 shows a block diagram of its integrated mains supply system with the function of emergency power supply, and Fig. 2 schematically shows the fitting.

The light source 2, 3 in the fitting 1 are LEDs. The LED light source 2, 3 is divided into two independently controlled sections. The LED light source 2, 3 is powered from the mains supply and the emergency power supply system. The mains power supply system has a supply input 230 V, AC 4, which is transmitted to the AC/DC impulse converter 6 through the block 5 of EMC filter, overload and surge protection devices. In parallel, the AC/DC converter 6 performs the function of separation from the mains. The separation line is indicated in Fig. 1 as a. The AC / DC converter 6 is controlled from block 7 detecting the level of the supply voltage. Block 7 detecting the power level with the hysteresis acts as a detection of failure and return of mains supply and directly controls the AC/DC converter 6 with the channel 8 controlling the power supply operation through the threshold switching with the hysteresis.

Emergency power supply system has a microcontroller 9 controlling the operation of functional blocks of the module 10 logically located downstream the mains supply section. The microcontroller 9 controls the operation of the charger 12 of rechargeable battery 13 through the charging control and regulation channel 11. The battery 13 is, in this example, the lead-acid battery VRLA, however, also another battery designed to work at low temperatures can be employed, for example, nickel-cadmium NiCd or nickel-metal-hydride NiMH. Information about the charge level of the battery 13, and its status of performance is directly transmitted to the microcontroller 9 via the channel 14 of voltage measurement of the battery 13. There is a temperature sensor 15 in the immediate vicinity of the rechargeable battery 13. The used temperature sensor 15 is a sensor of KTY81 series. The temperature sensor 15 performs an ongoing temperature measurement inside the fitting 1 near the rechargeable battery 13 and controls the charger 12, which thus charges the battery 13 with the use of temperature compensation by controlling the voltage parameter. The data from the temperature sensor 15, sent to the microcontroller 9, are also used to monitor the environment inside the fitting 1, and for signalling alarm conditions associated with the temperature at the local control 16 of the fitting 1, or remotely using a communication interface 17 that communicates with the master monitoring and controlling system. The local control 16 is a bi-color LED. The communication interface 17 is the first port 18 of the wire communication, and the second port 19 of wireless communication.

DC power supply with adjustable brightness for LED light sources 2 and 3 is from the SEPIC converter 20. Its communication with the microcontroller 9 is the channel 21 of control and regulation of the SEPIC converter 20 with a PWM signal. The system includes the block 22 for switching on the power supply from the battery 13 and block 23 for switching the power supply from the AC/DC converter 6, powering the SEPIC converter 20. The blocks 22 and 23 for switching on the power supply of the SEPIC converter 20 are controlled respectively via the control channels 24 and 25 by the microcontroller 9.

To monitor and control the SEPIC converter 20 and determine the efficiency status of the LED light sources 2 and 3 the channels 26 and 27 for measuring the current of the LED light sources 2 and 3 are used respectively, directly connected to the microcontroller 9. Supplying voltage for logic circuitry of the module, including the microcontroller 9, is generated by a power supply of LDO logic circuits 28. The two channels 29 and 30 are responsible for its power supply, respectively: from the block of the AC/DC converter 6 and from the battery 13. The SEPIC driver power supply is supported from the block of the SEPIC converter 20 through the channel 31.

Connector 32 is used to connect the control signal 230 V in order to monitor that signal via the block 33 for detecting the control voltage of 230V. The signal controls the remote switching of LED light sources 2 and 3 by the microcontroller 9. This is done through the channel 34 of the control voltage detection. The signal switching on the power supply of the LED light sources 2 and 3 comprises a bypass in the channel 34 of the control voltage detection, not shown in the drawing, in a form of a jumper, which allows switching on the power supply of the LED light sources 2 and 3 without the necessary presence of the control signal on the connector 32.

The module 10 thus includes the following functional blocks: microcontroller 9, charger 12, AC/DC converter 6, block 5 of the EMC filter, SEPIC converter 20, block 22 for switching on the power supply from the battery 13 and block 23 for switching on the power supply from the AC/DC converter 6, powering the SEPIC converter 20, power supply of LDO logic circuits 28 and block 33 for detecting the control voltage of 230V. The module 10 is connected through connectors with: power supply inputs 230 V, AC 4, LED light source 2, 3 split into two independently controlled sections, temperature sensor 15, rechargeable battery 13, connector 32 for connecting the control signal 230 V, local control 16 and communication interface 17.

The fitting 1 records the temperature measurements in the internal memory and records the moments when the temperature limits are exceeded.

The master monitoring and control system communicating cyclically with the fitting 1 via the communication interface 17 is provided for the cooperation with the fitting 1. With any inquiry about the status the fitting 1 sends the following information to the control unit: current status of functional efficiency, current temperature of the battery 13, associated with the temperature in the fitting 1, temperatures recorded in the local log of the fitting 1 and information about temperature alarms.

## Claims

1. An emergency light fitting for operation at low temperatures having a light source powered from the mains supply and the emergency power supply, wherein the emergency power supply system is equipped with a rechargeable battery and is powered by a AC/DC converter from the mains supply and the rechargeable battery is controlled by a temperature sensor, **characterized in that** the temperature sensor (15) is arranged in the immediate vicinity of the rechargeable battery (13), the rechargeable battery (13) is adjusted to operation at low temperatures and the fitting (1) is equipped additionally with a microcontroller (9), which is connected with:
- a charger (12), controlled and regulated through the charging control and regulation channel (11) of the battery (13),
- the battery (13), which voltage level and efficiency status are measured and determined by the channel (14) of voltage measurement,
- the temperature sensor (15),
- a SEPIC converter (20), powering the light sources (2, 3) controlled by the microcontroller (9) with the PWM signal through the channel (21) of control and regulation with the measurement of its voltage.
- block (22) for switching on the power supply from the battery (13) and the block (23) for switching on the power supply from the AC/DC converter (6), powering the SEPIC converter (20), controlled via control channels (24) and (25) respectively.
- at least two supply channels of light sources (2, 3) connected with the microcontroller (9) through the channels (26, 27) of the independent measurement of the current flowing in the light sources (2, 3),
- a communication interface (17),
- power supply of LDO logic circuits (28), generating voltage powering the logic circuits, which is supplied via two channels (29) and (30), respectively, from the block of the AC/DC converter (6) and from the battery (13),
and further the fitting (1) cooperates with the monitoring and control system communicating with it cyclically through the communication interface (17).

2. The fitting according to claim 1 **characterized in that** the rechargeable battery (13) is a battery selected among the batteries: lead-acid (VRLA), nickel-cadmium (NiCd) or nickel-metal-hydride batteries (NiMH).

3. The fitting according to claim 1 or 2, **characterized in that** the communication interface (17) is a wired communication module.

4. The fitting according to any of the preceding claims, **characterized in that** the communication interface (17) is a wireless communication module.

5. The fitting according to any of the preceding claims, **characterized in that** the light source (2, 3) are LEDs.
